# EUROPÄISCHE PATENTSCHRIFT

(11) **EP 1 740 669 B1**
(45) Veröffentlichungstag und Bekanntmachung des Hinweises auf die Patenterteilung: **25.08.2010**
(21) Anmeldenummer: 05742876.5
(22) Anmeldetag: 14.04.2005
(51) Int. Cl.: C09J 133/06, C09J 147/00, C09J 7/02

(54) **HAFTKLEBSTOFF FÜR PVC-FOLIEN**
CONTACT ADHESIVE FOR PVC FILMS
COLLE ADHESIVE POUR FEUILLES DE PVC

(30) Priorität: 19.04.2004 DE 102004019433
(43) Veröffentlichungstag der Anmeldung: 10.01.2007
(73) Patentinhaber: BASF SE, 67056 Ludwigshafen (DE)
(72) Erfinder: SCHUMACHER, Karl-Heinz, 67433 Neustadt (DE); CHOI, Nok-young, 67063 Ludwigshafen (DE); DRAGON, Andree, 67346 Speyer (DE); DIEHL, Heiko, 67136 Fussgönheim (DE)
(86) Internationale Anmeldenummer: PCT/EP2005/003918
(87) Internationale Veröffentlichungsnummer: WO 2005/100502

(56) Entgegenhaltungen:
- EP-A- 0 277 516
- EP-A- 0 454 426
- EP-A- 0 950 698
- WO-A-93/14161
- US-A- 4 113 540

## Beschreibung

Die Erfindung betrifft die Verwendung eines Klebstoffs zum Verbinden von zwei Substraten, von denen mindestens eins aus Weich-PVC ist, enthaltend ein durch radikalische Polymerisation von ethylenisch ungesättigten Verbindungen (Monomere) erhältliches Polymer, welches i) zu mindestens 60 Gew. % aus sogenannten Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 4 C Atomen und einer oder zwei Doppelbindungen oder Mischungen dieser Monomeren, und ii) zu mehr als 1 Gew. % aus Monomeren mit mindestens zwei nicht-konjugierten, polymerisierbaren Vinylgruppen ausgewählt aus Alkandiolacrylaten und Alkandiolmethacrylaten aufgebaut ist, wobei das Polymer zu mindestens 60 gew% aus C₁ bis C₂₀ Alkyl(meth)-acrylaten aufgebaut ist.

Weiterhin betrifft die Erfindung die Verwendung der Klebstoffe zur Herstellung von selbstklebenden Artikeln mit Weich-PVC als Trägermaterial.

Für Außenanwendungen werden häufig selbstklebende Etiketten und Bänder sowie bedruckte Folien mit Weich-PVC als Trägermaterial eingesetzt. Weich-PVC-Folien enthalten niedermolekulare Weichmacher auf Phthalat Basis oder polymere Weichmacher. Ein Problem, das durch die Verwendung dieser Weichmacher auftritt, ist, dass der Weichmacher aus der Folie in den Haftklebstoff migrieren kann. Hierdurch werden die anwendungstechnischen Klebeeigenschaften beeinträchtigt. Sowohl die Kohäsion des Klebstoffs, als auch die Adhäsion des Klebstoffs zur Oberfläche, auf die das Etikett bzw. die Folie geklebt wird, werden durch die Migration des Weichmachers in den Klebstoff im allgemeinen deutlich vermindert.

Im Außenbereich sind die selbstklebenden Artikel auch dem Einfluß von Feuchtigkeit ausgesetzt.

Die Einwirkung von Wasser auf den Klebstofffilm führt zu einer unerwünschten weißen Trübung, welche Weißanlaufen genannt wird.

Bei selbstklebenden Artikeln mit Polymerfolien, insbesondere Weich-PVC als Trägermaterial, kommt es häufig zu einem Schrumpfen der Folie bei der späteren Verwendung. Ein Schrumpfen ist insbesondere zu beobachten, wenn die selbstklebenden Artikel bei der Verwendung erhöhten Temperaturen ausgesetzt sind.

Gewünscht sind daher Klebstoffe, die selbstklebende Artikel mit einem verbesserten

Klebstoffe zur Herstellung von selbstklebenden Artikeln mit Weich-PVC als Trägermaterial sind z.B. aus DE-A-10229733 (PF 53677) und DE-A-10345799 (PF 54935) bekannt. Sie werden auch in EP-A-454426 und EP-A-978551 beschrieben. Aus WO 93/14161 sind Polymere mit maximal 1 % internem Vernetzer für diese Verwendung zu entnehmen.

Aufgabe der vorliegenden Erfindung waren daher Klebstoffe für selbstklebende Artikel mit möglichst geringer Schrumpfung und möglichst guter Wasserbeständigkeit (Weißanlaufen). Die Klebstoffe sollen weiterhin eine gute Adhäsion und Kohäsion haben, sowie gut verarbeitbar sein.

Demgemäß wurden die eingangs definierten Klebstoffe und ihre Verwendung gefunden.

Der erfindungsgemäße Klebstoff enthält das oben definierte Polymer.

Das Polymer ist durch radikalische Polymerisation von ethylenisch ungesättigten Verbindungen (Monomere) erhältlich.

Das Polymer besteht zu mindestens 60 Gew.-%, bevorzugt zu mindestens 80 Gew.-%, besonders bevorzugt zu mindestens 90 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 4 bis 8 C-Atomen und einer oder zwei olefinischen Doppelbindungen seien Ethylen, Propylen, Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Wesentliches Merkmal der Erfindung ist, dass das Polymer zu mehr als 1 Gew.-% aus Monomeren mit mindestens zwei nicht-konjugierten, polymerisierbaren Vinylgruppen aufgebaut ist (im nachfolgenden kurz interne Vernetzer genannt). Bevorzugte Vinylgruppen sind Acryl- bzw. Methacrylgruppen.

Besonders bevorzugt sind Alkandioldiacrylate oder Alkandioldi(meth)acrylate.

Ganz besonders bevorzugt sind Butandioldiacrylat oder Butandioldimethacrylat oder Hexandioldiacrylat oder Hexandioldimethacrylat.

Die Menge der internen Vernetzer beträgt vorzugsweise mindestens 1,1 Gew.-%, insbesondere mindestens 1,2 Gew.-%; die Menge beträgt im allgemeinen maximal 5 Gew.-% und insbesondere maximal 3 Gew.-%, jeweils bezogen auf das Polymer.

Neben den Hauptmonomeren und internen Vernetzern kann das Polymer weitere Monomere enthalten, z.B. Monomere mit Carbonsäure, Sulfonsäure oder Phosphonsäuregruppen. Bevorzugt sind Carbonsäuregruppen. Genannt seien z.B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, (Meth)acrylamid.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl-(meth)acrylat genannt.

Das Polymer enthält vorzugsweise hydrophile Gruppen ausgewählt aus Carboxylgruppen, Hydroxylgruppen, Aminogruppen und Carbonsäureamidgruppen. Der Gehalt dieser hydrophilen Gruppen beträgt insbesondere 0,001 bis 0,5 Mol auf 100 g Polymer. Vorzugsweise ist der Gehalt mindestens 0,005 Mol besonders bevorzugt mindestens 0,008 Mol und maximal 0,2 Mol insbesondere maximal 0,1 Mol, ganz besonders bevorzugt maximal 0,05 bzw. 0,03 Mol auf 100 g/Polymer.

Besonders bevorzugt sind die hydrophilen Gruppen, ausgewählt aus Carboxylgruppen, Hydroxylgruppen und Carbonsäureamidgruppen.

Besonders bevorzugt handelt es sich bei mindestens 20 Mol-% der Gesamtmolmenge dieser hydrophilen Gruppen um Carboxylgruppen.

Unter Carboxylgruppen werden sowohl Carbonsäuregruppen als auch deren Salze verstanden. Im Falle der Salze handelt es sich bevorzugt um Salze mit flüchtigen Basen, z.B. Ammoniak.

Die hydrophilen Gruppen können durch Copolymerisation der entsprechenden Monomere an das Polymer gebunden werden.

Bevorzugte Monomere mit hydrophilen Gruppen sind die oben genannten Monomere mit Carboxylgruppen und Hydroxylgruppen, insbesondere z.B. Acrylsäure.

Insbesondere ist das Polymer zu mindestens 60 Gew.-%, besonders bevorzugt zu mindestens 80 Gew.-% und ganz besonders bevorzugt zu mindestens 90 Gew.-% aus C₁ bis C₂₀ Alkyl(meth)acrylaten aufgebaut.

Die Herstellung der Polymere erfolgt in einer bevorzugten Ausführungsform durch Emulsionspolymerisation, es handelt sich daher um ein Emulsionspolymerisat.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestem der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄-bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 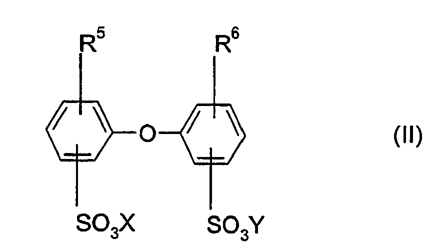 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax^{®} 2 A1, Emulan^{®} NP 50, Dextrol^{®} OC 50, Emulgator 825, Emulgator 825 S, Emulan^{®} OG, Texapon^{®} NSO, Nekanil^{®} 904 S, Lumiten^{®} I-RA, Lumiten^{®} E 3065, Disponil^{®} FES 77, Lutensol^{®} AT 18, Steinapol VSL, Emulphor NPS 25.

Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate.

Die grenzflächenaktive Substanz wird üblicherweise in Mengen von 0,1 bis 10 Gew.-Teile, vorzugsweise 0,2 bis 5 Gew.-Teile bezogen auf 100 Gew.-Teile der zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Inifiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das so hergestellte Polymer wird vorzugsweise in Form seiner wässrigen Dispersion verwendet.

Die mittlere Teilchengröße der in der wässrigen Dispersion dispergierten Polymerteilchen ist vorzugsweise kleiner 300 nm, insbesondere kleiner 200 nm. Besonders bevorzugt liegt die mittlere Teilchengröße zwischen 140 und 200 nm.

Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mäschtle, Makromolekulare Chemie 185 (1984), Seite 1025 -1039) bestimmt werden.

Der pH-Wert der Polymerdispersion wird vorzugsweise auf pH größer 4,5, insbesondere auf einen pH-Wert zwischen 5 und 8 eingestellt.

Die Glasübergangstemperatur des Polymeren, bzw. des Polymeren beträgt vorzugsweise -60 bis 0°C, besonders bevorzugt -60 bis -10°C und ganz besonders bevorzugt -60 bis -20°C.

Die Glasübergangstemperatur lässt sich nach üblichen Methoden wie Differentialthermoanalyse oder Differentail Scanning Calorimetrie (s. z.B. ASTM 3418/82, sog. "midpoint temperature") bestimmen.

Die Klebstoffe, vorzugsweise Haftklebstoffe, können allein aus dem Polymeren bzw. der wässrigen Dispersion des Polymeren bestehen.

Der Klebstoff benötigt keine externen Vernetzer. Ein Gehalt an externen Vernetzern ist daher im allgemeinen kleiner als 0,5 Gew.-Teile auf 100 Gew.-Teile Polymer und insbesondere kleiner 0,1 Gew.-Teile. Besonders bevorzugt wird auf externe Vernetzer ganz verzichtet.

Die Klebstoffe und Haftklebstoffe können weitere Zusatzstoffe enthalten Füllstoffe, Farbstoffe, Verlaufsmittel, Verdicker oder Tackifier (klebrigmachende Harze), Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymer (fest/fest).

Insbesondere eignet sich der Klebstoff bzw. Haftklebstoff zum Verbinden von Substraten, **dadurch gekennzeichnet, dass** zumindest eine der zu verbindenden Substratoberflächen aus Weich-PVC ist. Zum Beispiel kann der Klebstoff auf einen Träger, z.B. aus Papier oder Kunststoff aufgetragen werden und der so beschichtete Träger (z.B. ein Etikett, Klebeband oder Folie) auf ein Substrat aus Weich-PVC geklebt werden.

Insbesondere eigenen sich die erfindungsgemäßen Klebstoffe bzw. Haftklebstoffe zur Herstellung von selbstklebenden Artikeln, wie Etiketten, Klebebändern oder Klebefolien, z.B. Schutzfolien.

Die selbstklebenden Artikel bestehen im allgemeinen aus einem Träger und einer ein-oder beidseitig, vorzugsweise einseitig aufgebrachten Schicht des Klebstoffs.

Bei dem Trägermaterial kann es sich z.B. um Papier, vorzugsweise um Kunststofffolien aus Polyolefinen oder PVC handeln, besonders bevorzugt ist PVC, ganz besonders bevorzugt Weich-PVC.

Unter Weich-PVC versteht man Polyvinylchlorid, welches einen Gehalt an Weichmachern hat und eine erniedrigte Erweichungstemperatur aufweist. Übliche Weichmacher sind z.B. Phthalate, Epoxide, Adipinsäureester. Der Gehalt der Weichmacher im Weich-PVC beträgt i.a. mehr als 10, insbesondere mehr als 20 Gew.-%.

Bei Weich PVC können Weichmacher in die Klebstoffschicht migrieren und die Klebstoffeigenschaften deutlich verschlechtern. Mit dem erfindungsgemäßen Klebstoff wirkt sich eine Migration der Weichmacher nicht oder kaum auf die Eigenschaften des Klebstoffs aus. Weiterhin ist vor allem bei Weich-PVC ein Schrumpfen der Substrate durch den erfindungsgemäßen Klebstoff vermieden oder verringert.

Gegenstand der vorliegenden Erfindung sind daher insbesondere selbstklebende Artikel mit Weich-PVC als Trägermaterial und einer darauf beschichteten Klebstoffschicht aus dem obigen Klebstoff.

Zur Herstellung der Klebstoffschicht auf dem Trägermaterial kann das Trägermaterial in üblicher Weise beschichtet werden.

Die erhaltenen, beschichteten Substrate werden z.B. als Selbstklebeartikel, wie Etiketten, Klebebänder oder Folien verwendet.

Die selbstklebenden Artikel mit Weich-PVC als Trägermaterial eignen sich insbesondere für Außenanwendungen.

Insbesondere können bedruckte selbstklebende Folien im Außenbereich verwendet und z. B. auf Reklametafeln oder Fahrzeuge aller Art geklebt werden.

Die erfindungsgemäßen selbstklebenden Artikel haben gute anwendungstechnische Eigenschaften, insbesondere eine gute Schälfestigkeit (Adhäsion) und Scherfestigkeit (Kohäsion). Die Eigenschaften bleiben auch bei Weich-PVC als Trägermaterial gut.

Eine Trübung der Klebstoffschicht durch Einwirkung von Feuchtigkeit (Weißanlaufen) ist nicht oder kaum zu beobachten. Die Klebstoffschicht hat daher eine hohe Wasserbeständigkeit. Ein Schrumpfen der selbstklebenden Artikel ist kaum zu beobachten, auch nicht, wenn die Artikel hohen Temperaturen, z.B. mehr als 50°C, ausgesetzt sind.

### Beispiele

### Prüfmethoden

### Dimensionsstabilität (Schrumpfverhalten):

Zur Bestimmung der Dimensionsstabilität mit der Kreuzschnittmethode werden die Klebstoffe auf Siliconpapier (Laufenberg NSA 1370 weiss Beschichtung 56 B 4) mit 25 g/m² trocken beschichtet. Nach der Trocknung 3 Minuten bei 90°C wird die Klebstoffschicht auf Weich-PVC Folie (Renolit weiss, SK-Monomer 80790 transferiert). Nach 24 h Lagerung bei Raumtemperatur wird das Siliconpapier abgezogen und die beschichtete Weich-PVC Folie auf eine Glasplatte (25 cm x 25 cm) blasenfrei verklebt und angerollt. Wichtig ist, dass die Laufrichtung der Folie beachtet und gekennzeichnet wird. Die verklebte Folie wird nun mit einer Rasierklinge in einem Klingenhalter in der Mitte in Längs- und in Querrichtung mit je einem Schnitt geteilt. Nach dem Schneiden sollen vier gleich große Quadrate entstanden sein. Die Glasplatten werden anschließend bei 70°C gelagert. Nach 3 Tagen werden die Glasplatten etwa 1 Stunde bei RT abgekühlt und die Breite des Schnittspaltes im kalten Zustand gemessen.

Je geringer die Spaltbreite, um so besser ist das Schrumpfverhalten.

### Schälfestigkeit

Weich-PVC wurde wie oben beschrieben mit Klebstoff beschichtet.

Anschließend wurde die Schälfestigkeit (Adhäsion) bestimmt.

Der beschichtete Träger wurde in 25 mm breite Prüfstreifen geschnitten.

Bei der Bestimmung der Schälfestigkeit (Adhäsion) wurde jeweils ein 2,5 cm breiter Prüfstreifen auf einen Prüfkörper aus Stahl geklebt und mit einer 1 kg schweren Rolle 1 mal angerollt. Er wurde nach 1 Minute bzw. nach 24 Stunden Lagerung im Normklima mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfblech abgezogen und der dazu benötigte Kraftaufwand gemessen. Das Maß für die Schälfestigkeit war die Kraft in N/2,5 cm, die sich als Durchschnittswert aus fünf Messungen ergab. Die Prüfung erfolgte ebenfalls im Normklima.

### Weißanlaufen (Wasserbeständigkeit)

Die Prüfstreifen wurden in ein Wasserbad gehängt. Die Trübung des Klebstofffilms wurde über die Zeit beobachtet. Es wurde der Zeitpunkt bestimmt, an dem eine deutliche Trübung erkennbar wurde. Je länger der Zeitraum, um so besser ist die Wasserbeständigkeit.

### Ergebnisse:

Ergebnisse sind in der Tabelle aufgeführt.
- EHA:: Ethylhexylacrylat
- EA:: Ethylacrylat
- Vac:: Vinylacetat
- S:: Styrol
- AS:: Acrylsäure
- AMA:: Allylmethacrylat
- BDA:: Butandioldiacrylat
- DAP:: Diallylphthalat

| Copolymer, bestehend aus [pphm] | Schälfestigkeit auf Stahl nach 24 h (N/25 mm) | Weißanlaufen (sichtbares Weißanlaufen nach) | Schrumpf nach 3 d Lagerung bei 70°C (Spaltbreite nach Kreuzschnittmethode) |
|---|---|---|---|
| 60 EHA/27 EA/5 * VAc /5 S / 3 AS ohne Vernetzer | 30 | 2 h | 0,4 mm |
| 58,7 EHA / 27 EA / 5 VAc / 5S / 3 AS / 1,3 Butandioldiacrylat | 9 | 2 h | 0,1 mm |
| 58,7 EHA / 27 EA / 5 * VAc / 5S / 3 AS / 1,3 AMA | 1 | 10sec | 0,1 mm |
| EHA / EA / VAC / S / * AS / 1,3 Diallylphthalat | 11 | 20 min | 0,1 mm |

| | | | |
|---|---|---|---|
| * nicht erfindungsgemäss | | | |

## Patentansprüche

1. Verwendung eines Klebstoffs zum Verbinden von zwei Substraten, von denen mindestens eins aus Weich-PVC ist, wobei der Klebstoff ein durch radikalische Polymerisation von ethylenisch ungesättigten Verbindungen (Monomere) erhältliches Polymer enthält, welches
(i) zu mindestens 60 Gew. % aus sogenannten Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 4 C Atomen und einer oder zwei Doppelbindungen oder Mischungen dieser Monomeren, und
(ii) zu mehr als 1 Gew. % aus Monomeren mit mindestens zwei nicht-konjugierten, polymerisierbaren Vinylgruppen, ausgewählt aus Alkandioldiacrylaten und Alkandioldimethacrylaten, aufgebaut ist,
wobei das Polymer zu mindestens 60 Gew. % aus C1 bis C20 Alkyl(meth)acrylaten aufgebaut ist.

2. Verwendung gemäß Anspruch 1, **dadurch gekennzeichnet, dass** das Polymer zu 1,1 bis 5 Gew. % aus Alkandioldiacrylaten oder Alkandioldimethacrylate aufgebaut ist.

3. Verwendung gemäß einem der Ansprüche 1 bis 2, **dadurch gekennzeichnet, dass** es sich bei dem Polymer um ein Emulsionspolymerisat handelt.

4. Verwendung gemäß einem der Ansprüche 1 bis 3, **dadurch gekennzeichnet, dass** der Klebstoff im übrigen keine weiteren Vernetzer enthält.

5. Verwendung gemäß einem der Ansprüche 1 bis 4, **dadurch gekennzeichnet, dass** es sich um einen Haftklebstoff handelt.

6. Verwendung gemäß einem der Ansprüche 1 bis 5, **dadurch gekennzeichnet, dass** der Klebstoff, bzw. Haftklebstoff auf Trägermaterial aus PVC oder Weich-PVC aufgebracht wird.

7. Selbstklebende Artikel erhältlich unter Verwendung gemäß Anspruch 6.

## Claims

1. The use of an adhesive for joining two substrates of which at least one is made of plasticized PVC, the adhesive comprising a polymer obtainable by free-radical addition polymerization of ethylenically unsaturated compounds (monomers) and synthesized
(i) from at least 60% by weight of principal monomers selected from C1 to C20 alkyl (meth)acrylates, vinyl esters of carboxylic acids containing up to 20 carbon atoms, vinylaromatics having up to 20 carbon atoms, ethylenically unsaturated nitriles, vinyl halides, vinyl ethers of alcohols containing 1 to 10 carbon atoms, aliphatic hydrocarbons having 2 to 4 carbon atoms and one or two double bonds, and mixtures of these monomers, and
(ii) from more than 1% by weight of monomers containing at least two nonconjugated polymerizable vinyl groups selected from alkanediol diacrylates and alkanediol dimethacrylates,
the polymer being synthesized from at least 60% by weight of C1 to C20 alkyl (meth)acrylates.

2. The use according to claim 1, wherein the polymer is synthesized from 1.1 % to 5% by weight of alkanediol diacrylates or alkanediol dimethacrylates.

3. The use according to either of claims 1 to 2, wherein the polymer is an emulsion polymer.

4. The use according to any one of claims 1 to 3, wherein the adhesive otherwise contains no further crosslinkers.

5. The use according to any one of claims 1 to 4, relating to a pressure-sensitive adhesive.

6. The use according to any one of claims 1 to 5, wherein the adhesive/pressure-sensitive adhesive is applied to backing material made of unplasticized or plasticized PVC.

7. A self-adhesive article obtainable through use according to claim 6.

## Revendications

1. Utilisation d'un adhésif pour l'assemblage de deux substrats, dont au moins un est en PVC souple, l'adhésif contenant un polymère pouvant être obtenu par polymérisation radicalaire de composés (monomères) à insaturation éthylénique, qui est constitué
(i) à raison d'au moins 60 % en poids de monomères dits principaux, choisis parmi des (méth)acrylates d'alkyle en C₁-C₂₀, des esters vinyliques d'acides carboxyliques contenant jusqu'à 20 atomes de carbone, des composés vinylaromatiques ayant jusqu'à 20 atomes de carbone, des nitriles à insaturation éthylénique, des halogénures de vinyle, des éthers vinyliques d'alcools contenant de 1 à 10 atomes de carbone, des hydrocarbures aliphatiques ayant de 2 à 4 atomes de carbone et comportant une ou deux doubles liaisons ou des mélanges de ces monomères, et
(ii) à raison de plus de 1 % en poids de monomères comportant au moins deux groupes vinyle polymérisables non conjugués, choisis parmi les diacrylates d'alcanediols et les diméthacrylates d'alcanediols,
le polymère étant constitué à raison d'au moins 60 % en poids de (méth)acrylates d'alkyle en C₁-C₂₀.

2. Utilisation selon la revendication 1, **caractérisée en ce que** le polymère est constitué à raison de 1,1 à 5 % en poids de diacrylates d'alcanediols ou de diméthacrylates d'alcanediols.

3. Utilisation selon la revendication 1 ou 2, **caractérisée en ce que** le polymère consiste en un produit de polymérisation en émulsion.

4. Utilisation selon l'une quelconque des revendications 1 à 3, **caractérisée en ce que** l'adhésif ne contient en outre aucun autre agent de réticulation.

5. Utilisation selon l'une quelconque des revendications 1 à 4, **caractérisée en ce qu'**il s'agit d'un autoadhésif.

6. Utilisation selon l'une quelconque des revendications 1 à 5, **caractérisée en ce que** l'adhésif ou l'autoadhésif est appliqué sur un matériau de support en PVC ou PVC souple.

7. Article autoadhésif pouvant être obtenu avec utilisation selon la revendication 6.
